# EUROPÄISCHE PATENTSCHRIFT

(11) **EP 1 839 822 B1**
(45) Veröffentlichungstag und Bekanntmachung des Hinweises auf die Patenterteilung: **01.07.2009**
(21) Anmeldenummer: 07004107.4
(22) Anmeldetag: 28.02.2007
(51) Int. Cl.: B26D 1/00, B29D 30/46, B26D 1/04, B26D 9/00, B26D 1/18

(54) **Schneideinrichtung zum Schneiden von Bandmaterial, inbesondere von Textil- oder Stahlcordbändern**
Cutting device for cutting strip material, in particular textile or steel rope strips
Dispositif de coupe destiné à la coupe de matériaux en bandes, en particulier de bandes de textile ou de corde en acier

(30) Priorität: 22.03.2006 DE 102006013609
(43) Veröffentlichungstag der Anmeldung: 03.10.2007
(73) Patentinhaber: Karl Eugen Fischer GmbH Maschinenfabrik, 96224 Burgkunstadt (DE)
(72) Erfinder: Klenner, Ralf, 96272 Hochstadt (DE); Hoffmann, Bernd, 96224 Burgkunstadt (DE)
(74) Vertreter: Blaumeier, Jörg

(56) Entgegenhaltungen:
- EP-A- 0 988 942
- EP-A1- 0 768 046
- EP-A2- 0 125 148
- WO-A-00/03866
- DE-A1- 19 853 498
- FR-A1- 2 813 220
- US-A- 2 742 964
- US-A- 4 210 042

## Beschreibung

Die Erfindung betrifft eine Schneideinrichtung zum Schneiden von Bandmaterial, insbesondere von Textil- oder Stahlcordbändern, umfassend ein bezüglich des ruhenden Bandmaterials bewegbares Schneidmittel.

Aus der EP 0 125 148 ist eine Schneideinrichtung bekannt, geeignet zum Schneiden von Bandmaterial, insbesondere von Textil- oder Stahlcordbändern, umfassend ein bezüglich des ruhenden Bandmaterials bewegbares Schneidmittel. Das Schneidmittel besteht aus einem einzigen Doppelschneidenmesser mit einer bogenförmigen Schneide und einer hakenförmigen Schneide und dient der Erzeugung eines bandrandseitigen Anschnitts. Die Vorrichtung verfügt weiters über einen Saugbalken der auch zum Strecken des Schneidgutes verwendet werden kann.

Bei der Reifenherstellung müssen Textil- oder Stahlcordbandmaterialien mit Textil- bzw. Stahlfäden als Einlage in Fadenlängsrichtung geschnitten und anschließend wieder verspleisst werden. Wenn der nach dem Schneidvorgang erforderliche Spleiss als Stumpfspleiss, bei dem die miteinander zu verbindenden Bandkanten stumpf aneinander liegen, also nicht überlappen, ausgeführt werden muss und dieser Stumpfspleiss eine hohe Festigkeit haben soll, ist es zwingend erforderlich, dass beim vorherigen Abschneiden des Materials parallel zu den Fäden an beiden Schneidkanten keine Textil- bzw. Stahlfäden freigelegt werden. Denn ansonsten erhält die Spleissverbindung keine ausreichende Festigkeit, da zu wenig zu verspleissender Gummi unmittelbar im Bereich der Spleissnaht vorhanden ist. Denn die Festigkeit der Spleissverbindung ist ausschließlich auf die Verklebung über dem im Spleiss vorhandenen Gummi zurückzuführen, der sich beim Stumpfspleiss an den Schneidkanten verbindet und die Reißfestigkeit erzeugt. Bei einem freiliegenden Faden kann sich der Gummi nur mit dem freiliegenden Faden verkleben, was zu keiner ausreichenden Festigkeit führt und im Extremfall der Spleiss aufgehen kann.

Zum Schneiden solcher Textil- oder Stahlcordbänder kommen unterschiedliche Messer zum Einsatz, nämlich zum einen ein Hakenmesser, zum anderen ein Rundmesser. Ein Hakenmesser, das eine hakenförmige Schneide aufweist, wird von der Seite her in das Bandmaterial eingefahren. Es hat sich gezeigt, dass bei einem Schnitt mit einem solchen Hakenmesser, bevorzugt erhitzt, die nachher erzielbare Spleissfestigkeit am höchsten ist. Probleme bereitet jedoch der Einschnitt des Bandmaterials mit dem Hakenmesser. Das Hakenmesser wird entweder von oben in das Bandmaterial eingefahren, also mit seiner unteren Messerspitze voraus, was häufig dazu führt, dass bei einem Eintauchen nahe an einem Faden der Gummi von diesem Faden gekratzt wird, mithin also in diesem Bereich der Faden freiliegt und es lokal zu einer geringen Spleissfestigkeit kommt. Alternativ hierzu kann man das Hakenmesser auch von der Seite her, wo die Fäden enden, in das Bandmaterial einfahren, was aber häufig zur Folge hat, dass das Messer direkt in ein Fadenende einfährt und es sich verheddert bzw. der Faden herausgezogen wird.

Bei einem Rundmesser, das üblicherweise kreisrund ist, ergeben sich beim Eintauchen in das Bandmaterial von oben her keine Probleme, da das Rundmesser üblicherweise leicht verschiebbar gelagert ist und sich bei dem langsamen Einfahren seinen Weg zwischen die Fäden sucht. Wird aber das Material mit dem Rundmesser durchgeschnitten, so nimmt die erzielbare Spleissfestigkeit ab, verglichen mit einem Hakenmesserschnitt. Dies ist soweit ersichtlich darin begründet, dass das Rundmesser üblicherweise drehend gelagert ist, während das Hakenmesser feststeht, wenn es durch das Bandmaterial gezogen wird. Dabei kommt es beim Schnitt mit dem Hakenmesser zu einem Verschmiereffekt des beidseits geschnittenen Gummis. Dieser Effekt tritt beim Schneiden mit einem sich drehenden Rundmesser nicht auf, was vermutlich der Grund für die geringere Festigkeit ist.

Der Erfindung liegt damit das Problem zugrunde, eine Schneidvorrichtung anzugeben, die ein Schneiden von Textil- oder Stahlcordband ohne Einbußen hinsichtlich der Spleissfestigkeit beim Stumpfspleissen der geschnittenen Bandkanten ermöglicht.

Zur Lösung dieses Problems ist bei einer Schneideinrichtung der eingangs genannten Art erfindungsgemäß vorgesehen, dass das Schneidmittel ein der Erzeugung eines bandrandseitigen Anschnitts dienendes, eine gerundete Schneide aufweisendes Messer und ein diesem nachgeschaltetes, in den Anschnitt einfahrendes und das Bandmaterial durchschneidendes Hakenmesser umfasst.

Die erfindungsgemäße Schneideinrichtung sieht eine Kombination zweier unterschiedlicher Messertypen vor, die unterschiedlichen Zwecken dienen. Vorgesehen ist zum einen ein erstes Messer, das eine gerundete, bevorzugt bogenförmige Schneide aufweist, aber auch als kreisrundes Rundmesser ausgeführt sein kann. Dieses erste Messer dient ausschließlich dazu, einen Anschnitt am Bandrand zu erzeugen, also das Bandmaterial am Rand um ein kurzes Stück im Bereich mehrerer Millimeter (beispielsweise bis maximal 50 mm) zu öffnen. Hierzu fährt das die gerundete Schneide aufweisende Messer von oben auf das Bandmaterial auf, taucht also in dieses von oben ein und wird zur Erzeugung des Anschnitts gegebenenfalls ein kurzes Stück aus dem Bandmaterial herausgezogen, wenn der Anschnitt nicht bereits durch den vertikalen Eintauchvorgang erzeugt wurde. Der Anschnitt kann, nachdem ein gerundetes Messer, das von oben eintaucht, verwendet wird, optimal ausgeführt werden, so dass beidseits an den Kanten ausreichend Gummimaterial zur Verfügung steht, um auch im Anschnittbereich einen optimalen Spleiss zu realisieren.

Das zweite Messer, das Hakenmesser, dient zum eigentlichen Durchschneiden des Bandes. Es wird nun in den gebildeten Anschnitt von der Seite her eingefahren. Nachdem es zum gerundeten Messer fluchtend angeordnet ist, wird so sichergestellt, dass es auch tatsächlich in den gebildeten Anschnitt einfährt und nicht versetzt dazu auf das Band, gegebenenfalls direkt auf ein Fadenende, trifft. Das Hakenmesser wird anschließend durch das Bandmaterial gezogen, wobei im Bereich des mit diesem Messer durchgeführten Schnitts ebenfalls hinreichend Gummi an den beiden geschnittenen Bandkanten infolge des beschriebenen Verschmiereffekts verbleibt. Auch in diesem Schnittbereich kann ein optimaler Spleiss erzeugt werden. Insgesamt lässt sich somit aufgrund der erfindungsgemäßen Hintereinanderschaltung der beiden verschiedenen Messertypen und mithin der Durchführung zweier separater Schnitte ein optimaler Bandschnitt erzielen, der eine Stumpfspleissverbindung mit sehr hoher Spleissfestigkeit über die gesamte Spleisslänge ermöglicht.

Alternativ zur Verwendung zweier separater Messer sieht die Erfindung den Einsatz eines Doppelschneidenmessers vor, das an seinem unteren Rand eine gerundete Schneide aufweist, die die Funktion des Rundmessers erfüllt. Oberhalb dieser weist das Doppelschneidenmesser eine hakenförmige Schneide auf, die die Funktion des Hakenmessers erfüllt. Mit diesem Kombinationsmesser wird nun im ersten Schritt mittels der gerundeten Schneide der Anschnitt erzeugt, wonach nach entsprechender Positionierung mit der hakenförmigen Schneide in den Anschnitt eingefahren und das Bandmaterial durchgeschnitten wird. Hier werden also die mit der Erfindung verbundenen Vorteile mit nur einem Messer erreicht.

Das gerundete Messer und das Hakenmesser bzw. das Doppelschneidenmesser sind separat vertikal bewegbar, wozu entsprechende Hubmotoren oder elektrische, pneumatische oder hydraulische Zylinder vorgesehen sind. Während das Rundmesser bzw. das Doppelschneidenmesser, nachdem es von oben auf das Bandmaterial aufgesetzt wird, in jedem Fall vertikal bewegbar sein sollte, ist die vertikale Bewegbarkeit des separat vorgesehenen Hakenmessers nicht zwingend erforderlich. Sie dient primär der höhenmäßigen Ausrichtung des Messers und der Möglichkeit, es beim Zurückfahren in die Grundstellung in eine obere Position zu bringen, gleichwohl ist diese vertikale Bewegbarkeit, je nachdem, wie der Auflagetisch, auf dem das zu schneidende Bandmaterial ruht, ausgeführt ist, nicht zwingend erforderlich. Das gerundete Messer, gleich ob es sich um ein Bogen- oder ein Rundmesser handelt, bzw. das Doppelschneidenmesser kann zweckmäßigerweise längs einer senkrecht zur Schnittrichtung stehenden horizontalen Achse, gegebenenfalls über Federelemente mittig zentriert, verschiebbar gelagert. Diese verschiebbare, bevorzugt gegen die Rückstellung zweier seitlicher Federelemente zur mittigen Zentrierung erfolgte Lagerung lässt es zu, dass sich das Rundmesser bzw. das Doppelschneidenmesser mit seiner gerundeten Schneide beim Eintauchen in das Bandmaterial leicht bewegen kann, so dass es von dem Material geführt und sich dem Fadenverlauf anpassend leicht verschieben kann. Bevorzugt ist das gerundete Messer um diese Achse auch drehbar gelagert (auch ein aktiver Drehantrieb ist denkbar), so dass es nach dem Eintauchen und dem seitlichen Herausziehen eine gegebenenfalls auch vom Drehwinkel nur begrenzte Drehwinkel- oder Schwenkbewegung ausführt. Diese Dreh- oder Schwenkbewegung ist bezogen auf die nur sehr geringe Länge des Anschnitts (im Bereich weniger Millimeter bis bevorzugt maximal 25 mm) relativ gering. Das Doppelschneidenmesser ist nur um einen bestimmten begrenzten Winkel schwenkbar, so dass es mit seiner gerundeten Schneide zur Ausführung des Anschnitts nach dem Eintauchen aus dem Band gefahren werden kann, eine weitergehende Verschwenkung ist nicht erforderlich.

Das Hakenmesser oder, gegebenenfalls als Alternative zur oben beschriebenen axialen Verschiebbarkeit längs der Drehachse, auch das Doppelschneidenmesser, ist bevorzugt um eine vertikale Achse schwenkbar und/oder längs einer senkrecht zur Schnittrichtung stehenden horizontalen Achse linear verschiebbar. Beide Lagermöglichkeiten dienen dazu, eine gewisse Beweglichkeit des Hakenmessers oder des Doppelschneidenmessers sicherzustellen, so dass auch dieses in gewissem Maß vom Bandmaterial bzw. den zur Schnittlinie benachbarten Fäden geführt werden kann. Dabei ist bevorzugt eine lösbare Arretiereinrichtung für das Hakenmesser oder das Doppelschneidenmesser in einer Grundstellung vorgesehen, wobei diese Arretiereinrichtung beispielsweise in Form zweier seitlich am Hakenmesser, am Doppelschneidenmesser oder einem Messerhalter angreifenden beweglichen Klemmbacken ausgeführt ist, die elektrisch, hydraulisch oder pneumatisch gesteuert zwischen einer Arretierstellung und einer Lösestellung verstellbar sind. Über diese Arretiereinrichtung wird das Hakenmesser oder das Doppelschneidenmesser in einer Grundstellung fixiert. In dieser Stellung ist das separate Hakenmesser exakt fluchtend mit dem gerundeten Messer, das bevorzugt bei einer axial verschiebbaren Lagerung ebenfalls mittig zentriert ist, angeordnet. Die Arretiereinrichtung fixiert das Hakenmesser so lange, bis es um ein vorbestimmtes Stück in den Anschnitt eingefahren ist, wonach die Arretiereinrichtung gelöst wird und das Hakenmesser freigegeben ist. Das Doppelschneidenmesser kann solange fixiert bleiben, bis die hakenförmige Schneide in den Anschnitt eingefahren ist. Dabei wirkt die Arretiereinrichtung sowohl bezüglich der Schwenklagerung als auch der Linearlagerung des Hakenmessers oder des Doppelschneidenmessers, das heißt, die Arretiereinrichtung bringt das Hakenmesser sowohl in eine bezogen auf den Schwenkwinkel gegebene Grundstellung als auch in eine bezogen auf die lineare Verschiebung senkrecht zur Schnittrichtung gegebene Grundstellung.

Wenngleich grundsätzlich die Möglichkeit besteht, bei der Ausführung mit zwei separaten Messern das gerundete Messer, das prinzipiell nur vertikal, gegebenenfalls in Verbindung mit einer kurzen Horizontalbewegung, zum Ausfahren aus dem Bandmaterial zu bewegen ist, im Wesentlichen stationär anzuordnen und lediglich das Hakenmesser, am gerundeten Messer vorbei, zu bewegen, sieht eine zweckmäßige Erfindungsausgestaltung vor, das gerundete Messer und das Hakenmesser über eine gemeinsame Antriebseinrichtung in Schnittrichtung zu bewegen. Das heißt, das gesamte Schneidmittel bestehend aus gerundetem Messer und Hakenmesser mit den entsprechenden separaten Vertikalantrieben, Arretiereinrichtung etc. werden gemeinsam bewegt, wozu eine beliebige Linearbewegungseinheit vorgesehen sein kann. Beispielsweise kann ein zentraler Träger, an dem das Hakenmesser und das gerundete Messer aufgehängt sind, vorgesehen sein, der in einer Linearführung geführt ist, und über ein geeignetes Antriebsmittel, beispielsweise in Form eines umlaufenden Riemens oder eines Zahnstangen- oder Gewindestangentriebs etc., bewegt wird.

In Weiterbildung der Erfindung kann, gegebenenfalls jeweils, eine Heizeinrichtung zum Erwärmen des Hakenmessers und/oder des gerundeten Messers oder des Doppelschneidenmessers vorgesehen sein. Die Erwärmung insbesondere des Hakenmessers bzw. des Doppelschneidenmessers ist für einen optimalen Schnitt zweckmäßig, nachdem das heiße Hakenmesser bzw. die heiße hakenförmige Schneide des Doppelschneidenmessers den Gummi des Bandes im Schnittbereich leicht anschmilzt und es infolgedessen zu einem noch besseren Verschmiereffekt und mithin einer Ausbildung einer hinreichenden Gummischichtdicke im Schnittbereich kommt. Auch die Erwärmung des Rundmessers ist grundsätzlich vorteilhaft, muss aber nicht zwangsläufig vorgesehen sein.

Dabei kann die Heizeinrichtung, insbesondere die Heizeinrichtung zum Erwärmen des Hakenmessers bzw. des Doppelschneidenmessers mit dem Messer in Schnittrichtung bewegbar sein, sie wird also mitgeführt, das jeweilige Messer wird während der gesamten Schnittdauer kontinuierlich erwärmt. In diesem Fall kann die Heizeinrichtung im oder am Messerhalter des gerundeten Messers oder des Hakenmessers oder des Doppelschneidenmessers vorgesehen sein, alternativ kann sie auch in oder an der Arretiereinrichtung des Hakenmessers oder des Doppelschneidenmessers vorgesehen sein.

Alternativ zu einer mitgeführten Heizeinrichtung ist es auch denkbar, die Heizeinrichtung positionsfest anzuordnen und das Hakenmesser oder das gerundete Messer oder das Doppelschneidemesser in der nicht am Bandmaterial angreifenden Grundstellung zu erwärmen. Hier wird das jeweilige Messer also nur dann erwärmt, wenn es nicht gerade schneidet, so dass es wenngleich minimal während des Schnitts etwas abkühlt. Beim Einfahren in die Grundstellung jedoch wird es sofort wieder erwärmt, um den gegebenen Temperaturverlust auszugleichen.

Die Heizeinrichtung selbst kann in jeder der beschriebenen Ausgestaltungen ein Widerstandsheizer, also ein elektrisches Heizmittel, ein Strahlungsheizer oder ein Heizgebläse sein.

Die Erfindung sieht vor, dass die Schneideinrichtung eine oder mehrere Einrichtungen zum Fixieren und Spannen des Bandmaterials in einer Richtung im Wesentlichen senkrecht zur Schnittrichtung umfasst. Diese Einrichtung ermöglicht es, das Bandmaterial zum einen lagefest zu fixieren, so dass es während der Durchführung der einzelnen Schnitte nicht verrutscht. Zum anderen ermöglicht sie auch das Spannen des Bandmaterials senkrecht zur Schnittrichtung. Dies bewirkt, dass nach Einbringen des Anschnitts infolge der Bandspannung der Anschnitt etwas aufgezogen wird, sich also nach außen zur Bandkante hin um wenige Millimeter öffnet, so dass das Hakenmesser erleichtert in den Anschnitt einfahren kann. Dabei kann die Einrichtung eine kombinierte Einrichtung sein, die sowohl der Bandfixierung als auch der Bandspannung dient. Bevorzugt ist sie in Form zweier auf das Bandmaterial aufsetzbarer Niederhalter ausgeführt, von denen wenigstens einer im Wesentlichen senkrecht zur Schnittrichtung verfahrbar ist, während der andere lagefest das Band stabilisiert. Bevorzugt jedoch sind beide Niederhalter in entgegengesetzter Richtung verfahrbar, wobei dies über einen gemeinsamen Antrieb oder separate Antriebe erfolgen kann. Denkbar ist es aber auch, eine separate Einrichtung zum Fixieren des Bandes und eine separate Einrichtung zum Spannen des Bandes vorzusehen.

Weiterhin sieht eine zweckmäßige Weiterbildung der Erfindung einen das Bandmaterial zum Schneiden auflagernden Tisch vor, der einen höhenverstellbaren Tischabschnitt aufweist, der das gerundete Messer oder das Doppelschneidenmesser mit seiner gerundeten Schneide beim Einbringen des Anschnitts gegenlagert und zum Schneiden mit dem Hakenmesser bzw. der hakenförmigen Schneide des Doppelschneidenmessers absenkbar ist. Dieser Tischabschnitt, der sich über die gesamte Tischlänge parallel zur Schnittrichtung erstreckt, ist beispielsweise 30 - 70 mm, bevorzugt 50 mm, breit und wird in die obere Gegenlagerstellung gefahren, wenn der Anschnitt einzubringen ist. Er lagert das gerundete Messer oder das Doppelschneidenmesser gegen, wenn dieses in das Band eintaucht und es auf den Tischabschnitt drückt. Ist der Anschnitt eingebracht und wird von der Seite her das Hakenmesser bzw. die hakenförmige Schneides des Doppelschneidenmessers, das mit seinem unteren Ende (beim Doppelschneidenmesser der unteren gerundeten Schneide) unterhalb der Bandebene liegt, eingefahren, so ist der Tisch am Abschnitt abgesenkt, so dass das Hakenmesser bzw. das Doppelschneidenmesser nicht mit dem Tisch kollidiert. Denkbar wäre es aber natürlich auch, im Bereich der Schneidkante eine leichte Erhöhung der Tischebene mit einem längslaufenden Spalt vorzusehen, in dem das Hakenmesser bzw. das Doppelschneidenmesser läuft, wenn es über den Tisch gezogen wird.

Neben der Schneideinrichtung selbst betrifft die Erfindung ferner ein Verfahren zum Schneiden von Bandmaterial, insbesondere von Textil- oder Stahlcordbändern, wobei sich dieses Verfahren dadurch auszeichnet, dass in einem ersten Schneidvorgang mittels eines eine gerundete Schneide aufweisenden, ob oben auf das Bandmaterial gefahrenen Messers bandrandseitig ein Anschnitt erzeugt wird, wonach in einem zweiten Schneidvorgang ein Hakenmesser oder eine hakenförmige Schneide des als Doppelschneidenmesser ausgeführten eine Messers in den infolge einer Spannung des Bandmaterials aufgezogenen Anschnitt eingefahren und durch das Bandmaterial, dieses durchschneidend, gezogen wird.

Das gerundete Messer und das Hakenmesser bzw. das Doppelschneidenmesser sind zur Durchführung des jeweiligen Schnitts aus einer Grundstellung in eine Schneidstellung und nach Durchführung des jeweiligen Schnitts wieder in die Grundstellung bewegbar.

Der Anschnitt wird bevorzugt mit einer Länge von 2 - 50 mm, insbesondere 2 - 25 mm, gemessen von der Bandrandkante, wo der Anschnitt infolge der Spannung aufklafft, erzeugt. Zum endgültigen Durchschneiden wird das Hakenmesser bzw. das Doppelschneidenmesser mit seiner hakenförmigen Schneide bevorzugt mit niedriger Geschwindigkeit in den Anschnitt gefahren und anschließend mit höherer Geschwindigkeit durch das Bandmaterial gezogen. Bevorzugt wird das Hakenmesser, gegebenenfalls auch das gerundete Messer, bzw. das Doppelschneidenmesser beheizt.

Wenngleich die Möglichkeit besteht, das Bandmaterial bereits vor dem Anbringen des Anschnitts zu spannen, so dass der Anschnitt unmittelbar nach Eintauchen des gerundeten Messers spannungsbedingt aufgezogen wird, ist es auch möglich, das Bandmaterial erst nach dem Erzeugen des Anschnitts durch Auseinanderziehen um wenige Millimeter zu spannen.

Weitere Vorteile, Merkmale und Einzelheiten der Erfindung ergeben sich aus dem im folgenden beschrieb Ausführungsbeispiel sowie anhand der Zeichnungen. Dabei zeigen:
- Fig. 1: eine Vorderansicht einer erfindungsgemäßen Schneideinrichtung in Form einer Prinzipdarstellung,
- Fig. 2: eine Seitenansicht der Schneideinrichtung aus Fig. 1,
- Fig. 3: eine Schnittansicht durch die Schneideinrichtung in Richtung der Linie III - III in Fig. 1,
- Fig. 4: eine Vorderansicht einer zweiten erfindungsgemäßen Schneideinrichtung mit Doppelschneidenmesser in Form einer Prinzipdarstellung, und
- Fig. 5: eine Prinzipdarstellung eines Doppelschneidenmessers.

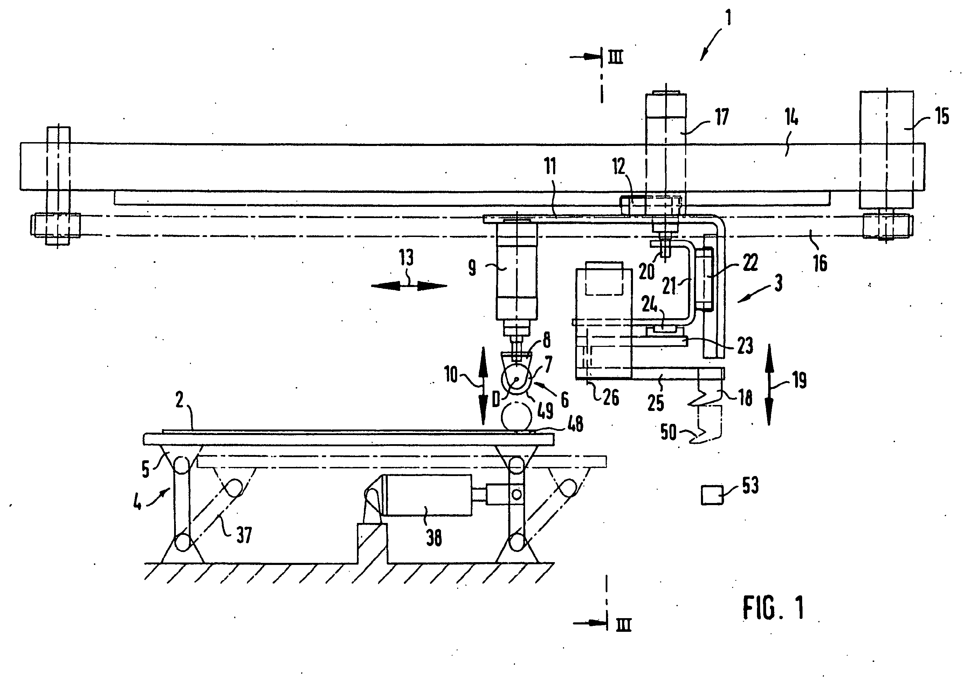

Fig. 1 zeigt eine erfindungsgemäße Schneideinrichtung 1 zum Schneiden von Textil- oder Cordbandmaterial 2, umfassend ein Schneidmittel 3 und einen das Bandmaterial auflagernden Tisch 4, von dem in Fig. 1 der Übersichtlichkeit halber nur ein verschwenkbarer Tischabschnitt 5 dargestellt ist, worauf nachfolgend noch eingegangen wird. Das Schneidmittel umfasst ein erstes gerundetes Messer 6, das hier als kreisförmiges Rundmesser 7 dargestellt ist. Dieses Rundmesser 7 ist in einem Messerhalter 8 angeordnet, wobei es um die Drehachse D drehbar ist und längs dieser Drehachse, bevorzugt gegen die Rückstellkraft zweier seitlich wirkender Spannfedern, verschiebbar ist, so dass sich mithin eine Axialbewegbarkeit senkrecht zur Schnittrichtung ergibt. Die beiden nicht näher gezeigten Spannfedern zentrieren das Rundmesser 7 achsmittig. Das Rundmesser 7 ist über eine Hubeinrichtung 9 vertikal bewegbar, wie durch den Doppelpfeil 10 dargestellt ist. Bei dieser Hubeinrichtung 9 kann es sich um einen hydraulischen oder pneumatischen Zylinder oder einen entsprechenden elektrischen Hubantrieb handeln. Die Hubeinrichtung 9 selber ist an einem Träger 11 angeordnet, über den das gesamte Schneidmittel über eine Linearführung 12 in Richtung des Doppelpfeils 13 an einer Führung 14 verfahrbar ist. Hierzu ist ein Antriebsmotor 15 vorgesehen, der im gezeigten Beispiel über einen Riementrieb 16, der mit der Linearführung 12 gekoppelt ist, die Bewegung des Schneidmittels 3 bewirkt.

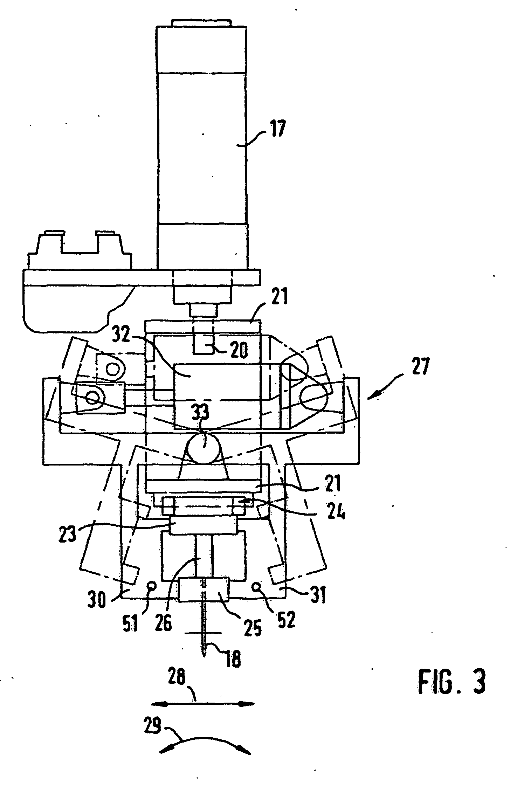

An dem Träger 11 ist weiterhin eine zweite Hubeinrichtung 17 vorgesehen, die zum Bewegen des zweiten Schneidelements, nämlich des Hakenmessers 18, dient. Über die Hubeinrichtung 17, auch hier ein pneumatischer oder hydraulischer Zylinder oder ein elektrischer Antrieb, kann das Hakenmesser 18 vertikal in Richtung des Doppelpfeils 19 bewegt werden. Hierzu ist der Stellkolben 20 der Hubeinrichtung 17 mit einem hier im Wesentlichen C-förmigen Träger 21 verbunden, der über eine Linearführung 22 vertikal bewegbar an dem vertikalen Schenkel des im Wesentlichen L-förmigen Trägers 11 geführt ist. An den unteren Horizontalschenkel des C-förmigen Trägers 21 ist ein Messerträger 23 in einer Linearführung 24 aufgenommen. An dem Messerträger 23 ist ein weiterer Messerträger 25 angeordnet, wobei der Messerträger 25 um eine Vertikalachse 26 relativ zum lagefesten Messerträger 23 verschwenkbar ist. Das heißt, dass das Hakenmesser, das am hinteren Ende des zweiten Messerträgers 25 angeordnet ist, um die Drehachse 26 horizontal verschwenkt werden kann. Nachdem der zweite Messerträger 25 über die Drehachsverbindung 26 am ersten Messerträger 23 angeordnet ist, der wiederum linear über die Linearführung 24 senkrecht zur Schnittrichtung bewegbar ist, ergibt sich zwangsläufig, dass damit auch das Hakenmesser 18 in Richtung der Linearführung, also senkrecht zur Schnittrichtung, verstellbar angeordnet ist. Die Linearführung 24, der erste Messerträger 23 sowie der zweite Messerträger 25, der auch als Messerhalter bezeichnet werden kann, sind in der Schnittansicht gemäß Fig. 3 vergrößert dargestellt. In dieser ist auch die Verbindung der Hubeinrichtung 17 mit dem Träger 21 gezeigt.

Weiterhin zeigt Fig. 3 im Detail eine Arretiereinrichtung 27, die zum Arretieren des über die Linearführung in Richtung des Doppelpfeils 28 verschiebbaren und um die Drehachse 26 wie durch den Doppelpfeil 29 dargestellt horizontal verschwenkbaren Hakenmessers 18 dient. Die Arretiereinrichtung 27 umfasst zwei Klemmbacken 30, 31, die über einen pneumatisch, hydraulisch oder einen elektrisch ansteuerbaren Stellzylinder 32 aus einer in Fig. 3 durchgezogen dargestellten Klemm- oder Arretierstellung in eine Lösestellung, die in Fig. 3 gestrichelt dargestellt ist, bewegbar sind. In der Klemmstellung liegen ersichtlich die beiden Klemmbacken 30, 31 an den beiden Messerträgern 23 und 25 an, diese in einer zentralen Mittenposition, in der das Hakenmesser unmittelbar fluchtend zum Rundmesser 7 liegt, fixierend. Die Bewegbarkeit in Richtung der Doppelpfeile 28 und 29 des Hakenmessers 18 ist also gesperrt. Werden die beiden Klemmbacken 30, 31 über den Stellzylinder 32 in die geöffnete Stellung nach außen um die Schwenkachse 33 geschwenkt, so wird die Linearführung 24 und die Drehachse 26 freigegeben, das heißt, das Hakenmesser 18 ist verschiebbar und verdrehbar.

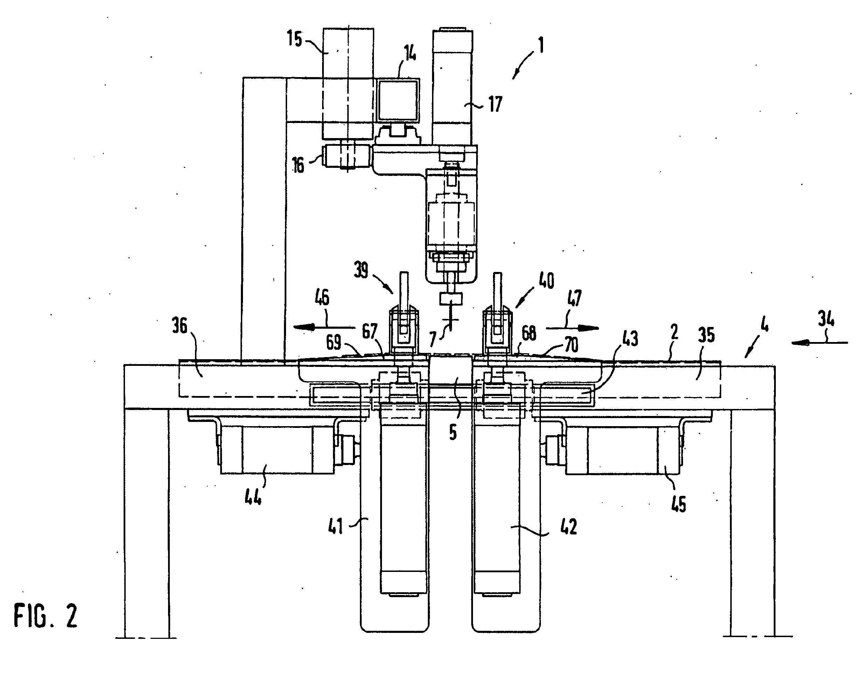

Fig. 2 zeigt die Seitenansicht der erfindungsgemäßen Schneideinrichtung 1 aus Fig. 1. Nachdem das Hakenmesser 18 fluchtend hinter dem Rundmesser angeordnet ist, ist in dieser Darstellung nur das Rundmesser 7 sichtbar. Dem Tisch 4, auf den das zu schneidende Band über eine nicht näher gezeigte Zuführeinrichtung, wie durch den Pfeil 34 dargestellt, aufgelegt wurde, weist an seiner Oberseite zwei Förderbänder 35, 36 auf, die zum Abfördern der geschnittenen Streifen dienen. Zwischen diesen befindet sich der bereits zur Fig. 1 beschriebene Tischabschnitt 5, der wie in Fig. 1 dargestellt ist, aus einer angehobenen, in Fig. 1 durchgezogen dargestellten Position in eine abgesenkte, in Fig. 1 gestrichelt dargestellte Position gesenkt werden kann. Hierzu ist im gezeigten Beispiel der Tischabschnitt 5 über eine Art Parallelogrammgestänge 37 schwenkgelagert, zum Verstellen ist ein entsprechender Stellantrieb 38 vorgesehen.

Weiterhin sind dem Tisch 4 im erfindungsgemäßen Ausführungsbeispiel zwei Niederhalter 39, 40 zugeordnet, die eine Doppelfunktion haben. Die Niederhalter können vertikal bewegt werden, wozu entsprechende Hubeinrichtungen 41, 42, auch hier hydraulisch oder pneumatisch oder elektrisch gesteuert, dienen. In der angehobenen Stellung greifen sie nicht am Bandmaterial 2 an, in der abgesenkten Stellung drücken sie auf dieses und fixieren es an jeweiligen, den Niederhaltern zugeordneten Auflagen 67, 68, über die das Bandmaterial geführt ist, so dass es während des Schnittes nicht verrutschen kann. Die Auflagen 67, 68 weisen leicht schräg verlaufende Abschnitte 69, 70 auf, die einen sanften Übergang des Bandmaterials zum jeweiligen Förderband 35, 36 hin ermöglichen. Das Bandmaterial liegt auf den Auflagen 67, 68 leicht erhöht gegenüber der Förderbandebene. Ein angefördertes Band wird zunächst über das Förderband 35 zur Auflage 68 gefördert, auf der es z.B. luftunterstützt weiterbewegt wird. Hierzu sind an der Auflage 68 z.B. eine Vielzahl von Luftlöchern vorgesehen, über die ein das Band tragendes Luftkissen erzeugt werden kann. Ein solches kann auch über dem entsprechende Luftlöcher aufweisenden Tischabschnitt 5 erzeugt werden, um das Band über diesen zur anschließenden Auflage 67 zu fördern, wo ebenfalls z.B. über entsprechende Luftlöcher ein unterstützendes Luftkissen erzeugt wird. Anschließend wird das Band vom folgenden Förderband 36 übernommen. Anstelle einer Unterstützung über z.B. ein Luftkissen im Bereich des Tischabschnitts 5 könnte dort auch eine Übergabeeinrichtung, z.B. in Form einer Zange oder eines Klemmzylinders zum Übergeben von der Auflage 68 auf die Auflage 67 vorgesehen sind.

Die Niederhalter 39, 40 mitsamt ihren Auflagen 67, 68 sind des Weiteren in einer Linearführung 43 bewegbar gelagert und können über entsprechende Stellantriebe 44, 45, auch hier hydraulisch, elektrisch oder pneumatisch steuerbar, in die beiden durch die Pfeile 46, 47 gezeigten Richtungen auseinander gefahren bzw. wieder zueinander bewegt werden. Dies dient dazu, das Bandmaterial 2, wenn es zuvor über die beiden Niederhalter 39, 40 gegen die Auflagen 67, 68 gedrückt und damit fixiert wurde, durch Auseinanderfahren der beiden Niederhalter 39, 40 samt Auflagen 67, 68 zu spannen, so dass ein über das Rundmesser 7 eingebrachter Anschnitt infolge der Bandspannung aufklafft und sich diese Einschnittöffnung beim Durchziehen des Hakenmessers 18 spannungsbedingt weiter öffnet.

Das Schneiden des Bandmaterials 2 geht wie folgt vonstatten:

Zunächst wird das Bandmaterial 2 in die Schneideinrichtung 1 transportiert und positioniert. Anschließend fahren die beiden Niederhalter 39, 40, gesteuert über die jeweiligen Stellantriebe 44, 45, ab und drücken das Bandmaterial gegen die Auflagen 67, 68 und fixieren es.

Grundsätzlich besteht die Möglichkeit, die beiden Niederhalter 39, 40 samt Auflagen 67, 68 bereits jetzt wie durch die Pfeile 46, 47 dargestellt um wenige Millimeter auseinander zu fahren und das Bandmaterial zu spannen. Gleichwohl wird dies bevorzugt noch nicht vorgenommen, sondern erst, nachdem der Anschnitt erzeugt wurde. Zu diesem Zweck wird das Rundmesser 7 in unmittelbarer Nähe der Bandkante 48 oberhalb des Bandmaterials 2 positioniert und anschließend über die Hubeinrichtung 9 abgesenkt, so dass das Rundmesser 7 mit seiner Schneide 49 von oben her in das Bandmaterial 2 eintaucht. Wie beschrieben ist das Rundmesser 7 auf der Drehachse D leicht axial verschiebbar angeordnet, so dass es sich selbstständig infolge seiner Bewegbarkeit senkrecht zur Schnittrichtung seinen Weg zwischen zwei benachbarte Fäden des Textil- oder Stahlcordbandes 2 sucht. Ist das Rundmesser 7, das über den hochgefahrenen Tischabschnitt 5 gegengelagert ist, abgesenkt und ist das Bandmaterial 2 allein durch die Vertikalbewegung eingeschnitten, wird es über den gemeinsamen Schneidmittelantrieb 17 zur Seite (in Fig. 1 nach rechts) gefahren, so dass das Bandmaterial zur Kante hin aufgeschlitzt und eingeschnitten wird. Damit ist der Anschnitt erzeugt, das Rundmesser 7 wird über die Hubeinrichtung 9 wieder angehoben.

Sodann fährt der Tischabschnitt 5 in die in Fig.1 gezeigte abgesenkte Stellung, das heißt, das Bandmaterial liegt in diesem Bereich frei und wird nicht mehr unterstützt. Der Tischabschnitt 5 ist beispielsweise 50 mm breit, das heißt, das Bandmaterial liegt nur um ein kleines Stück frei.

Nachdem nun der Anschnitt erzeugt wurde, fahren die beiden Niederhalter 39, 40 samt ihrer Auflagen 67, 68 (sofern nicht bereits geschehen) in Richtung der Pfeile 46, 47 etwas auseinander und spannen das Bandmaterial 2 auch im freiliegenden Bereich, so dass der erzeugte Anschnitt aufklafft. Nun fährt das Hakenmesser 18, gesteuert über die Hubeinrichtung 17, in die in Fig. 1 gestrichelt dargestellte abgesenkte Position, in der es mit seiner hakenförmigen Schneide 50 in der Bandebene liegt. Dabei ist das Hakenmesser 18 über die Arretiereinrichtung 27 lagefest fixiert, es kann sich also nicht zur Seite bewegen bzw. verschwenken. Nun wird über den zentralen Antrieb 15 das gesamte Schneidmittel 3, also Rundmesser 7 und Hakenmesser 18, in Schnittrichtung bewegt. Die Bewegung erfolgt relativ langsam, da zunächst das Hakenmesser in den aufgespannten Anschnitt einfährt. Sobald sich das Hakenmesser im Anschnitt befindet, öffnet die Arretiereinrichtung 27, das heißt, die beiden Klemmbacken 30, 31 werden in die in Fig. 3 gezeigte Offenstellung geschwenkt, so dass das Hakenmesser 18 um die beiden Freiheitsgrade bewegbar ist. Nun wird über den Antrieb 15 das Schneidmittel in Schnittrichtung mit deutlich erhöhter Geschwindigkeit verfahren. Das Hakenmesser durchschneidet das Bandmaterial, also den Gummi zwischen zwei nebeneinander liegenden Fäden. Nachdem das Hakenmesser 18 leicht verschiebbar und leicht drehbar ist, da das Arretiermittel 27 geöffnet hat, kann es kleine Ungenauigkeiten in der Fadenführung, die leicht gewinkelt oder gewellt verlaufen, ausgleichen. Die Bewegung des Schneidmittel 3 findet so lange statt, bis das Hakenmesser 18 das Bandmaterial vollständig durchschnitten hat. Sodann wird das Hakenmesser 18 wieder in die angehobene Grundstellung über die Hubeinrichtung 17 gebracht und das gesamte Schneidmittel über den zentralen Antrieb 15 wieder in die in Fig. 1 gezeigte Ausgangsstellung zurückgefahren. Gleichzeitig fährt auch der Tischabschnitt 5 wieder in die angehobene Position, die Niederhalter 39, 40 samt ihrer Auflagen 67, 68 werden wieder in die enger zueinander stehende Ausgangsstellung zurückgefahren. Der abgeschnittene Bandabschnitt kann nun über das Förderband 36 abtransportiert und das nachfolgend zu schneidende Bandmaterial über das Förderband 35 zugeführt werden.

An dieser Stelle ist darauf hinzuweisen, dass selbstverständlich verschiedene Vorgänge auch gleichzeitig ablaufen können, wenngleich diese gemäß obiger Ausführung zeitlich hintereinander beschrieben wurden.

Wie in Fig. 3 ferner gezeigt ist, sind in oder an den beiden Klemmbacken 30, 31 zwei Heizeinrichtungen 51, 52 integriert, die zum Erwärmen des Hakenmessers 18 über den Messerträger 25 dienen. Hierbei kann es sich um beliebige Heizeinrichtungen handeln (Fig. 3 ist lediglich eine Prinzipdarstellung), es können elektrische Widerstandsheizer oder Heizgebläse oder Strahlungsheizer hierzu verwendet werden. Die Heizeinrichtungen werden also mit dem Messer bewegt, können dieses also ständig erwärmen. Alternativ wäre es natürlich denkbar, eine stationäre Heizeinrichtung 53 vorzusehen, wie in Fig. 1 lediglich exemplarisch dargestellt ist, die das Hakenmesser 18 ausschließlich in der zurückgezogenen Grundstellung erwärmt.

Schließlich ist noch festzuhalten, dass es möglich ist, die zentralen Elemente der erfindungsgemäßen Schneideinrichtung auch um eine Vertikalachse drehen zu können, wenn ein schräg verlaufender Schnitt erfolgen soll. Zu diesem Zweck wird das gesamte Schneidmittel nebst Antrieb sowie die Niederhalter nebst Auflagen und Antrieb um eine Vertikalachse relativ zum Tisch verschwenkt, der dann keinen absenkbaren Tischabschnitt aufweist, oder der dergestalt ausgelegt ist, dass er ebenfalls relativ zum Bandmaterial mit verschwenkt werden kann.

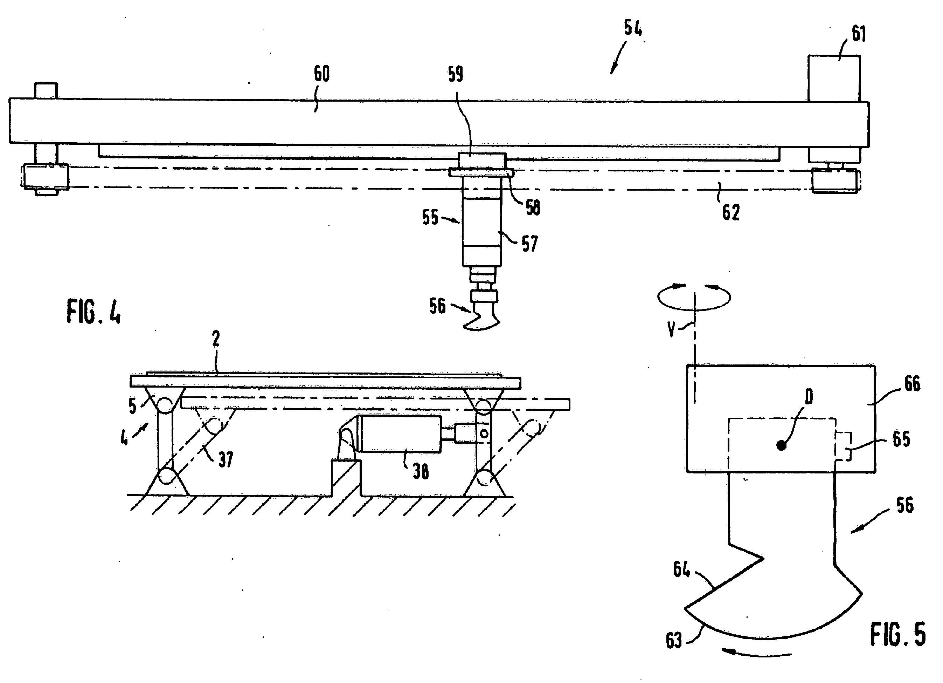

Fig. 4 zeigt eine weitere erfindungsgemäße Ausführungsform einer Schneideinrichtung 54, bei der ein Schneidmittel 55 vorgesehen ist, das lediglich ein Messer, das hier als Doppelschneidenmesser 56 ausgeführt ist, umfasst. Dieses Doppelschneidemesser, auf das bezüglich Fig. 5 noch näher eingegangen wird, dient zum Ausführen beider Schnitte, also zum einen zur Erzeugung des Anschnitts, zum anderen zur Erzeugung des vollständigen Banddurchschnitts. Das Doppelschneidenmesser 56 ist über eine entsprechende Hubeinrichtung 57 vertikal bewegbar. Die Hubeinrichtung 57 ist an einem Träger 58 angeordnet, der über eine Linearführung 59 an dem Träger 60 verfahrbar ist, wozu auch hier ein zentraler Antrieb 61 dient, der mit der Linearführung 59 beispielsweise über einen Riemen 62 gekoppelt ist. Bei dieser Ausgestaltung entfallen also sämtliche Einrichtungsteile, die bei der Ausgestaltung gemäß Fig. 1 für das dort separate Hakenmesser benötigt werden, vielmehr kommt diese Schneideinrichtung mit wesentlich weniger Bauelementen aus.

Fig. 5 zeigt das Doppelschneidenmesser 56 in vergrößerter Prinzipdarstellung. Das Doppelschneidenmesser 56 weist an seiner Unterseite eine gerundete Schneide 63 auf, die zur Erzeugung des Anschnitts dient und die zu diesem Zweck über die Hubeinrichtung 57 von oben auf das Bandmaterial gedrückt wird. Vorgesehen ist ferner eine hakenförmige Schneide 64, die die Funktion des Hakenmessers 18 aus Fig. 1 übernimmt und zum Erzeugen des Durchschnitts dient. Das Doppelschneidenmessen 56 ist um eine Drehachse D verschwenkbar, jedoch gegen einen Anschlag 65 wegbegrenzt. Wird das Doppelschneidenmesser 56 aufgesetzt, so drückt die gerundete Schneide 63 auf das Bandmaterial und schneidet dieses ein. Wird nun das Doppelschneidenmesser 56 über den Antrieb 61 zur Seite, im Ausführungsbeispiel gemäß Fig. 4 nach rechts, bewegt, so schwenkt das Doppelschneidenmesser 56 um die Drehachse D, die gerundete Schneide 63 rollt also zur Seite hin ab und schneidet bis zum Bandrand durch. Wird nun das Doppelschneidenmesser 56 entlastet, schwenkt es gegen den Anschlag 65, der die Schwenkbewegung begrenzt, wieder in die wie in Fig. 5 gezeigte Ausgangsstellung zurück. Anschließend kann der Schnitt mit der hakenförmigen Schneide 64 erfolgen, wozu das Doppelschneidenmesser 56, nachdem der Tischabschnitt 5, der auch hier bevorzugt vorgesehen ist, abgesenkt wurde, ebenfalls vertikal nach unten gefahren wird, bis die hakenförmige Schneide 64 die Schnitthöhe erreicht hat. Sodann fährt die hakenförmige Schneide 64 des gegen den Anschlag 65 gegengelagerten Doppelschneidenmessers 56, angetrieben über den Antrieb 61, in den Anschnitt ein und wird durch das Bandmaterial gezogen. Über hier nicht näher gezeigte Niederhalter wird auch hier das Bandmaterial in der eingangs beschriebenen Weise gespannt, so das sich der anschnitt spannungsbedingt leicht öffnet.

Wie beschrieben ist das Doppelschneidenmesser 56 um die Drehachse D schwenkbar. Es ist aber auch denkbar, das Doppelschneidenmesser 56 auf der Drehachse D axial bewegbar zu lagern, gegebenenfalls zwischen zwei rückstellenden Federn, ähnlich wie bei dem Rundmesser 7 gemäß Fig. 1, um zu ermöglichen, dass die gerundete Schneide 63 beim Eintauchen sich selbständig ihren Weg zwischen die beiden Fäden sucht. Alternativ wäre es auch denkbar, den Messerhalter 66 über eine Linearführung, ähnlich der Linearführung 24 in Fig. 1, in einer Richtung senkrecht zur Schnittrichtung linear bewegbar zu lagern.

Weiterhin wäre es möglich, den Messerhalter 66, in dem das Doppelschneidenmesser 56 aufgenommen ist, um eine Vertikalachse V wegbegrenzt drehbar zu lagern, so dass eine gewisse Verschwenkbarkeit im Doppelschneidenmesser 56 um die Vertikale gegeben ist, ähnlich wie dies über die wegbegrenzte Drehachse 26 beim Hakenmesser 18 aus Fig. 1 gegeben ist. Die Vertikalachse V sollte nicht vertikal zur Drehachse D stehen, sondern möglichst weit vor dieser, gesehen in Schnittrichtung, liegen, gegebenenfalls unter Verwendung eines verlängerten Messerhalters 66.

Weiterhin ist es denkbar, die jeweils realisierte Bewegung des Doppelschneidenmessers 56, sei es entlang der Drehachse D oder um die Vertikalachse V, über eine geeignete, hier nicht näher gezeigte Arretiereinrichtung im Bedarf zu sperren. Diese Arretiereinrichtung würde beispielsweise fest mit dem Kolben der Hubeinrichtung 57 verbunden sein und könnte ebenfalls in Form geeigneter Klemmbacken, wie bezüglich der Arretiereinrichtung 27 beschrieben, in Form geeigneter pneumatisch, hydraulisch oder elektrisch gestellter Klemmbacken ausgeführt sein, die zum einen die Verdrehbewegung des Messerhalters 66 durch klemmende Halterung desselben sperren können, wie auch über einen entsprechenden weiteren Klemmabschnitt das Doppelschneidenmesser 56 direkt in der mittigen Position auf der Drehachse D klemmend haltern können. Die Klemmbacken umgreifen also von der Seite her in entsprechender Weise den Messerhalter 66 wie auch das Doppelschneidenmesser 56 und fixieren beide, so dass jede Bewegbarkeit um einen der beschriebenen Freiheitsgrade unterbunden ist. Es wäre auch denkbar, diese Klemmeinrichtung so auszugestalten, dass die Bewegung längs der Drehachse wie auch um die Vertikalachse über separate Klemmteile separat arretiert werden kann, um beispielsweise eine Verdrehung des Messerhalters 56 zu verhindern und diesen zu arretieren, während die Verschwenkung um bzw. Axialbewegung in der Drehachse D während des Eintauchens der gerundeten Kante 63 freigegeben ist.

Während in Fig. 4 eine separate, die Erwärmung in der Grundstellung ermöglichende Heizeinrichtung 53 auch für das Doppelschneidenmesser 56 dargestellt ist, kann eine solche Heizeinrichtung natürlich auch, wenngleich nicht näher gezeigt, direkt am Schneidmittel 55, dort vorzugsweise am Messerhalter 66 vorgesehen sein. Diese in ihrer Art beliebige Heizeinrichtung wird dann mit dem Doppelschneidenmesser 56 mitbewegt, heizt dieses also kontinuierlich.

Soweit nicht ausführlich bezüglich Fig. 4 und 5 beschrieben, kommen dort dieselben Bauteile zum Einsatz, wie sie bezüglich der ersten erfindungsgemäßen Schneideinrichtung 1 bezüglich der Figuren 1 bis 3 beschrieben wurden. So insbesondere der Tisch 4 nebst Tischabschnitt 5 sowie die zugeordneten Niederhalter 39, 40, die auch hier sowohl vertikal als auch nebst ihren Auflagen 67, 68 zum Spannen des Bandabschnitts horizontal verfahrbar sind. Insoweit wird auf die entsprechenden Ausführungen zu den Figuren 1 bis 3 verwiesen. Der zentrale Unterschied der Schneideinrichtung 54 zu der Schneideinrichtung 1 ist die Verwendung lediglich eines Messers, nämlich des Doppelschneidenmessers 56, das zur Durchführung beider Schneidvorgänge dient. Die Schneideinrichtung 54 ist ersichtlich von dem Gesamtaufbau einfacher konzipiert, da lediglich ein Vertikalantrieb zum Anheben und Absenken des Doppelschneidenmessers 56 sowie ein Antrieb zum horizontalen Bewegen zum Durchschneiden des Bandmaterials benötigt wird.

Abschließend ist festzuhalten, dass zur Steuerung des Betriebs der jeweiligen Schneideinrichtung 1 bzw. 54 eine zentrale, hier nicht näher gezeigte Steuerungseinrichtung, die alle Elemente der jeweiligen Schneideinrichtung steuert, vorgesehen ist.

## Patentansprüche

1. Schneideinrichtung zum Schneiden von Bandmaterial, insbesondere von Textil- oder Stahlcordbändern, umfassend ein bezüglich des ruhenden Bandmaterials bewegbares Schneidmittel, wobei das Schneidmittel ein der Erzeugung eines bandrandseitigen Anschnitts dienendes, eine gerundete Schneide (48) aufweisendes Messer (6) und ein diesem nachgeschaltetes, in den Anschnitt einfahrendes und das Bandmaterial (2) durchschneidendes Hakenmesser (18) oder ein einziges Doppelschneidenmesser(56) mit einer bogenförmigen Schneide (63) und einer hakenförmigen Schneide (64) umfasst, wobei eine Einrichtung (39, 40) zum Spannen des Bandmaterials (2) in einer Richtung im Wesentlichen senkrecht zur Schnittrichtung vorgesehen ist, wobei die Einrichtung in Form zweier auf das Bandmaterial (2) aufsetzbarer Niederhalter (39, 40), von denen zum Spannen des Bandmaterials (2) wenigstens einer im Wesentlichen senkrecht zur Schnittrichtung verfahrbar ist, ausgeführt ist.

2. Schneideinrichtung nach Anspruch 1, **dadurch gekennzeichnet, dass** das gerundete Messer (6) eine bogenförmige Schneide (48) aufweist, oder ein Rundmesser (7) ist.

3. Schneideinrichtung nach Anspruch 1 oder 2, **dadurch gekennzeichnet, dass** das gerundete Messer (6), gegebenenfalls auch das Hakenmesser (18), oder das Doppelschneidenmesser (56) vertikal bewegbar sind.

4. Schneideinrichtung nach einem der vorangehenden Ansprüche, **dadurch gekennzeichnet, dass** das gerundete Messer (6) oder das Doppelschneidenmesser (56) längs einer senkrecht zur Schnittrichtung stehenden horizontalen Achse (D), gegebenenfalls über Federelemente mittig zentriert, verschiebbar gelagert ist.

5. Schneideinrichtung nach Anspruch 4, **dadurch gekennzeichnet, dass** das gerundete Messer (6) oder das Doppelschneidenmesser (56) um die Achse (D) drehbar ist.

6. Schneideinrichtung nach einem der vorangehenden Ansprüche, **dadurch gekennzeichnet, dass** das Hakenmesser (18) oder das Doppelschneidenmesser (56) um eine vertikale Achse (26, V) schwenkbar und/oder längs einer senkrecht zur Schnittrichtung stehenden horizontalen Achse (24) linear verschiebbar ist.

7. Schneideinrichtung nach Anspruch 6, **dadurch gekennzeichnet, dass** eine lösbare Arretiereinrichtung (27) für das Hakenmesser (18) oder das Doppelschneidenmesser (56) in einer Grundstellung vorgesehen ist.

8. Schneideinrichtung nach Anspruch 7, **dadurch gekennzeichnet, dass** die Arretiereinrichtung (27) in Form zweier seitlich am Hakenmesser (18), am Doppelschneidenmesser (56) oder einem Messerhalter (25, 66) angreifenden beweglichen Klemmbacken (30, 31) ausgeführt ist.

9. Schneideinrichtung nach einem der vorangehenden Ansprüche, **dadurch gekennzeichnet, dass** das gerundete Messer (6) und das Hakenmesser (18) über eine gemeinsame Antriebseinrichtung (15) in Schnittrichtung bewegbar sind.

10. Schneideinrichtung nach einem der vorangehenden Ansprüche, **dadurch gekennzeichnet, dass**, gegebenenfalls jeweils, eine Heizeinrichtung (51, 52) zum Erwärmen des Hakenmessers (18) und/oder des gerundeten (6) Messers oder des Doppelschneidenmessers (56) vorgesehen ist.

11. Schneideinrichtung nach Anspruch 10, **dadurch gekennzeichnet, dass** die Heizeinrichtung (51, 52), insbesondere die Heizeinrichtung zum Erwärmen des Hakenmessers (18) oder des Doppelschneidenmessers (56), mit dem Messer (6, 18, 56) in Schnittrichtung bewegbar ist.

12. Schneideinrichtung nach Anspruch 11, **dadurch gekennzeichnet, dass** die Heizeinrichtung im oder am Messerhalter (8, 25, 66) des gerundeten Messers (6) oder des Hakenmessers (18) oder des Doppelschneidenmessers (56) oder in oder an der Arretiereinrichtung (27) des Hakenmessers (18) oder des Doppelschneidenmessers (56) vorgesehen ist.

13. Schneideinrichtung nach Anspruch 10, **dadurch gekennzeichnet, dass** die Heizeinrichtung (53) positionsfest angeordnet ist und das Hakenmesser (18) oder das gerundete Messer (6) oder das Doppelschneidenmesser (56) in der nicht am Bandmaterial (2) angreifenden Grundstellung erwärmt.

14. Schneideinrichtung nach einem der Ansprüche 10 bis 13, **dadurch gekennzeichnet, dass** die Heizeinrichtung (51, 52, 53) ein Widerstandsheizer, ein Strahlungsheizer oder ein Heizgebläse ist.

15. Schneideinrichtung nach einem der vorangehenden Ansprüche, **dadurch gekennzeichnet, dass** beide Niederhalter (39, 40) in entgegengesetzte Richtungen, über einen gemeinsamen Antrieb oder separate Antriebe (44, 45) bewegt, verfahrbar sind.

16. Schneideinrichtung nach einem der vorangehenden Ansprüche, **dadurch gekennzeichnet, dass** ein das Bandmaterial zum Schneiden auflagernder Tisch (4) vorgesehen ist, der einen höhenverstellbaren Tischabschnitt (5) aufweist, der das gerundete Messer (6) oder das Doppelschneidenmesser beim Einbringen des Anschnitts gegenlagert und zum Schneiden mit dem Hakenmesser (18) oder der hakenförmigen Schneide (64) absenkbar ist.

17. Verfahren zum Schneiden von Bandmaterial, insbesondere von Textil- oder Stahlcordbändern, wobei in einem ersten Schneidvorgang mittels eines eine gerundete Schneide aufweisenden, von oben auf das Bandmaterial gefahrenen Messers bandrandseitig ein Anschnitt erzeugt wird, wonach in einem zweiten Schneidvorgang ein Hakenmesser oder eine hakenförmige Schneide des als Doppelschneidenmesser ausgeführten Messers in den infolge einer Spannung des Bandmaterials, erzeugt durch zwei auf das Bandmaterial aufgesetzte Niederhalter, von denen wenigstens einer im Wesentlichen senkrecht zur Schnittrichtung verfahren wird, aufgezogenen Anschnitt eingefahren und durch das Bandmaterial, dieses durchschneidend, gezogen wird.

18. Verfahren nach Anspruch 17, **dadurch gekennzeichnet, dass** das gerundete Messer und das Hakenmesser oder das Doppelschneidenmesser zur Durchführung des jeweiligen Schnitts aus einer Grundstellung in eine Schneidstellung und nach Durchführung des jeweiligen Schnitts wieder in die Grundstellung bewegt werden.

19. Verfahren nach Anspruch 17 oder 18, **dadurch gekennzeichnet, dass** der Anschnitt mit einer Länge von 2 - 50 mm, insbesondere 2 - 25 mm, erzeugt wird.

20. Verfahren nach einem der Ansprüche 17 bis 20, **dadurch gekennzeichnet, dass** das Hakenmesser oder das Doppelschneidenmesser mit seiner hakenförmigen Schneide mit niedriger Geschwindigkeit in den Anschnitt gefahren und anschließend mit höherer Geschwindigkeit durch das Bandmaterial bewegt wird.

21. Verfahren nach einem der Ansprüche 17 bis 21, **dadurch gekennzeichnet, dass** das Hakenmesser und/oder das gerundete Messer oder das Doppelschneidenmesser beheizt werden.

22. Verfahren nach einem der Ansprüche 17 bis 21, **dadurch gekennzeichnet, dass** das Bandmaterial erst nach dem Erzeugen des Anschnitts durch Auseinanderziehen gespannt wird.

## Claims

1. Cutting device for cutting strip material, in particular textile or steel-cord strips, comprising a cutting means displaceable relative to the stationary strip material, wherein the cutting means comprises a blade (6) providing a rounded cutting edge (48) serving to provide a starting cut at the edge of the strip and a hook blade (18) or a single, double-cutting-edge blade (56) with one curved cutting edge (63) and one hook-shaped cutting edge (64) attached downstream of the latter, running into the starting cut and cutting through the strip material (2), wherein a device (39, 40) is provided for tensioning the strip material (2) in a direction substantially perpendicular to the cutting direction, wherein the device is designed in the form of two holding elements (39, 40) capable of being positioned on the strip material (2), one of which can be displaced substantially perpendicular to the cutting direction in order to tension the strip material (2).

2. Cutting device according to claim 1,
**characterised in that**
the rounded blade (6) provides a curved cutting edge (48), or is a circular blade (7).

3. Cutting device according to claim 1 or 2,
**characterised in that**
the rounded blade (6), optionally also the hook blade (18) or the double-cutting-edge blade (56), are displaceable in a vertical direction.

4. Cutting device according to any one of the preceding claims,
**characterised in that**
the rounded blade (6) or the double-cutting-edge blade (56) is mounted in a displaceable manner along a horizontal axis (D) disposed perpendicular to the cutting direction, optionally centred in a central position by means of spring elements.

5. Cutting device according to claim 4,
**characterised in that**
the rounded blade (6) or the double-cutting-edge blade (56) is rotatable about the axis (D).

6. Cutting device according to any one of the preceding claims,
**characterised in that**
the hook blade (18) or the double-cutting-edge blade (56) is rotatable about a vertical axis (26, V) and/or displaceable in a linear manner along a horizontal axis (24) disposed perpendicular to the cutting direction.

7. Cutting device according to claim 6,
**characterised in that**
a detachable locking device (27) for the hook blade (18) or the double-cutting-edge blade (56) is provided in a starting position.

8. Cutting device according to claim 7,
**characterised in that**
the locking device (27) is designed in the form of two displaceable clamping jaws (30, 31) engaging laterally on the hook blade (18), on the double-cutting-edge blade (56) or on a blade holder (25, 66).

9. Cutting device according to any one of the preceding claims,
**characterised in that**
the rounded blade (6) and the hook blade (18) are displaceable in the cutting direction via a common drive device (15).

10. Cutting device according to any one of the preceding claims,
**characterised in that**
a heating device (51, 52) is optionally provided, in each case for heating the hook blade (18) and/or the rounded (6) blade or the double-cutting-edge blade (56).

11. Cutting device according to claim 10,
**characterised in that**
the heating device (51, 52), in particular, the heating device for heating the hook blade (18) or the double-cutting-edge blade (56), is displaceable with the blade (6, 18, 56) in the cutting direction.

12. Cutting device according to claim 11,
**characterised in that**
the heating device is provided in or on the blade holder (8, 25, 66) of the rounded blade (6) or of the hook blade (18) or of the double-cutting-edge blade (56) or in or on the locking device (27) of the hook blade (18) or of the double-cutting-edge blade (56).

13. Cutting device according to claim 10,
**characterised in that**
the heating device (53) is disposed in a fixed position, and heats the hook blade (18) or the rounded blade (6) or the double-cutting-edge blade (56) in the starting position not engaging on the strip material (2).

14. Cutting device according to any one of claims 10 to 13,
**characterised in that**
the heating device (51, 52, 53) is a resistance heater, a radiating heater or a fan heater.

15. Cutting device according to any one of the preceding claims,
**characterised in that**
the two holding elements (39, 40) are displaceable in opposite directions, being driven via a common drive or separate drives (44, 45).

16. Cutting device according to any one of the preceding claims,
**characterised in that**
a table (4) bearing the strip material to be cut is provided, which comprises a height-adjustable table portion (5), which counters the rounded blade (6) or the double-cutting-edge blade during the introduction of the starting cut and can be lowered for cutting with the hook blade (18) or the hookshaped cutting edge (64).

17. Method for cutting strip material, in particular textile or steel-cord strips, wherein, in a first cutting process, a starting cut is made at the edge of the strip by means of a blade with a rounded cutting edge descending onto the strip material from above, after which, in a second cutting process, a hook blade or a hook-shaped cutting edge of the blade designed as a double-cutting-edge blade is introduced into the starting cut, opened up as a result of a tensioning of the strip material provided by two holding elements positioned on the strip material, of which at least one is displaced substantially perpendicular to the cutting direction, and drawn through the strip material cutting through the latter.

18. Method according to claim 17,
**characterised in that**
the rounded blade and the hook blade or the double-cutting-edge blade are displaced from a starting position into a cutting position for the implementation of each cut and back into the starting position after the implementation of the respective cut.

19. Method according to claim 17 or 18,
**characterised in that**
the starting cut is made with a length from 2 - 50 mm, in particular from 2 - 25 mm.

20. Method according to any one of claims 17 to 20,
**characterised in that**
the hook blade or the double-cutting-edge blade with its hook-shaped cutting edge is displaced at low velocity into the starting cut and then displaced at a higher velocity through the strip material.

21. Method according to any one of claims 17 to 21,
**characterised in that**
the hook blade and/or the rounded blade or the double-cutting-edge blade are heated.

22. Method according to any one of claims 17 to 21,
**characterised in that**
the strip material is tensioned by drawing apart only after the provision of the starting cut.

## Revendications

1. Dispositif de coupe destiné à la coupe de matériaux en bande, en particulier de bandes textiles ou de câble d'acier, comprenant un moyen de coupe mobile par rapport au matériau en bande statique, dans lequel le moyen de coupe comprend un couteau (6) présentant une lame arrondie (48) et servant à produire une entrée de coupe côté bord de bande, et un couteau à crochet (18) placé en aval de celui-ci, entrant dans l'entrée de coupe et sectionnant le matériau en bande (2), ou un seul couteau à deux lames (56) avec une lame en forme d'arc (63) et une lame en forme de crochet (64), dans lequel un dispositif (39, 40) destiné à tendre le matériau en bande (2) dans une direction substantiellement perpendiculaire à la direction de coupe est prévu, dans lequel le dispositif est réalisé sous la forme de deux serre-flan (39, 40) pouvant être posés sur le matériau en bande (2) et dont au moins l'un peut être déplacé de façon substantiellement perpendiculaire à la direction de coupe pour tendre le matériau en bande (2).

2. Dispositif de coupe selon la revendication 1, **caractérisé en ce que** le couteau arrondi (6) présente une lame en forme d'arc (48) ou un couteau circulaire (7).

3. Dispositif de coupe selon la revendication 1 ou 2, **caractérisé en ce que** le couteau arrondi (6), le cas échéant aussi le couteau à crochet (18) ou le couteau à deux lames (56), peuvent être déplacés verticalement.

4. Dispositif de coupe selon l'une quelconque des revendications précédentes, **caractérisé en ce que** le couteau arrondi (6) ou le couteau à deux lames (56) est monté mobile le long d'un axe horizontal (D) situé perpendiculairement à la direction de coupe, éventuellement en étant centré au milieu par l'intermédiaire d'éléments de ressort.

5. Dispositif de coupe selon la revendication 4, **caractérisé en ce que** le couteau arrondi (6) ou le couteau à deux lames (56) peut être amené à tourner autour de l'axe (D).

6. Dispositif de coupe selon l'une quelconque des revendications précédentes, **caractérisé en ce que** le couteau à crochet (18) ou le couteau à deux lames (56) peut être amené à pivoter autour d'un axe vertical (26, V) et/ou être déplacé linéairement le long d'un axe horizontal (24) situé perpendiculairement à la direction de coupe.

7. Dispositif de coupe selon la revendication 6, **caractérisé en ce qu'**un dispositif de blocage amovible (27) est prévu pour le couteau à crochet (18) ou le couteau à deux lames (56) dans une position initiale.

8. Dispositif de coupe selon la revendication 7, **caractérisé en ce que** le dispositif de blocage (27) est réalisé sous la forme de deux mâchoires de serrage (30, 31) mobiles, attaquant latéralement au niveau du couteau à crochet (18), du couteau à deux lames (56) ou d'un support de couteau (25, 66).

9. Dispositif de coupe selon l'une quelconque des revendications précédentes, **caractérisé en ce que** le couteau arrondi (6) et le couteau à crochet (18) peuvent être déplacés dans la direction de coupe par un dispositif d'entraînement commun (15).

10. Dispositif de coupe selon l'une quelconque des revendications précédentes, **caractérisé en ce qu'**éventuellement, respectivement un dispositif de chauffage (51, 52) est prévu pour chauffer le couteau à crochet (18) et/ou le couteau arrondi (6) ou le couteau à deux lames (56).

11. Dispositif de coupe selon la revendication 10, **caractérisé en ce que** le dispositif de chauffage (51, 52), en particulier le dispositif de chauffage pour chauffer le couteau à crochet (18) ou le couteau à deux lames (56), peut être déplacé avec le couteau (6, 18, 56) dans la direction de coupe.

12. Dispositif de coupe selon la revendication 11, **caractérisé en ce que** le dispositif de chauffage est prévu dans ou sur le support de couteau (8, 25, 66) du couteau arrondi (6) ou du couteau à crochet (18) ou du couteau à deux lames (56) ou dans ou sur le dispositif de blocage (27) du couteau à crochet (18) ou du couteau à deux lames (56).

13. Dispositif de coupe selon la revendication 10, **caractérisé en ce que** le dispositif de chauffage (53) est disposé en étant fixé en position et chauffe le couteau à crochet (18) ou le couteau arrondi (6) ou le couteau à deux lames (56) dans la position initiale n'attaquant pas au niveau du matériau en bande (2).

14. Dispositif de coupe selon l'une quelconque des revendications 10 à 13, **caractérisé en ce que** le dispositif de chauffage (51, 52, 53) est un chauffage par résistance, un chauffage par rayonnement ou un ventilateur de chauffage.

15. Dispositif de coupe selon l'une quelconque des revendications précédentes, **caractérisé en ce que** les deux serre-flan (39, 40) peuvent être déplacés dans des directions opposées, en étant mis en mouvement par un dispositif d'entraînement commun ou par des dispositifs d'entraînement séparés (44, 45).

16. Dispositif de coupe selon l'une quelconque des revendications précédentes, **caractérisé en ce qu'**une table (4) supportant le matériau en bande pour la découpe est prévue, ladite table présentant une portion de table (5) réglable en hauteur qui constitue une butée pour le couteau arrondi (6) ou le couteau à deux lames lors de la réalisation de l'entrée de coupe et qui peut être abaissée pour la découpe à l'aide du couteau à crochet (18) ou de la lame en forme de crochet (64).

17. Procédé de coupe de matériaux en bande, en particulier de bandes textiles ou de bandes de câble d'acier, dans lequel, dans une première opération de coupe, au moyen d'un couteau présentant une lame arrondie et avancé depuis le haut vers le matériau en bande, une entrée de coupe est réalisée côté bord de bande, après quoi, dans une deuxième opération de coupe, un couteau à crochet ou une lame en forme de crochet du couteau réalisé comme un couteau à deux lames est introduit(e) dans l'entrée de coupe écartée suite à une mise en tension du matériau en bande, produite par deux serre-flan posés sur le matériau en bande et dont au moins l'un est déplacé de façon substantiellement perpendiculaire à la direction de coupe, et est tiré(e) à travers le matériau en bande en le sectionnant.

18. Procédé selon la revendication 17, **caractérisé en ce que** le couteau arrondi et le couteau à crochet ou le couteau à deux lames sont déplacés pour l'exécution de la coupe respective à partir d'une position initiale vers une position de coupe, et après exécution de la coupe respective, ramenés à la position initiale.

19. Procédé selon la revendication 17 ou 18, **caractérisé en ce que** l'entrée de coupe est réalisée avec une longueur de 2 à 50 mm, en particulier de 2 à 25 mm.

20. Procédé selon l'une quelconque des revendications 17 à 19, **caractérisé en ce que** le couteau à crochet ou le couteau à deux lames avec sa lame en forme de crochet est avancé à faible vitesse dans l'entrée de coupe et ensuite déplacé à une vitesse supérieure à travers le matériau en bande.

21. Procédé selon l'une quelconque des revendications 17 à 20, **caractérisé en ce que** le couteau à crochet et/ou le couteau arrondi ou le couteau à deux lames est/sont chauffé(s).

22. Procédé selon l'une quelconque des revendications 17 à 21, **caractérisé en ce qu'**après réalisation de l'entrée de coupe, le matériau en bande est tendu par écartement.
